# FASCICULE DE BREVET EUROPEEN

(11) **EP 4 389 520 B1**
(45) Date de publication et mention de la délivrance du brevet: **29.10.2025**
(21) Numéro de dépôt: 23219101.5
(22) Date de dépôt: 21.12.2023
(51) Int. Cl.: B60Q 1/26, B60K 11/08, B60Q 1/50, F21S 43/237, B60R 19/52

(54) **ENSEMBLE DE FACE AVANT ÉQUIPÉ D'UN DISPOSITIF LUMINEUX**
FRONTBAUGRUPPE MIT EINER LEUCHTVORRICHTUNG
FRONT FACE ASSEMBLY WITH LIGHT EMITTING DEVICE

(30) Priorité: 23.12.2022 FR 2214371
(43) Date de publication de la demande: 26.06.2024
(73) Titulaire: VALEO SYSTEMES THERMIQUES, 78320 Le Mesnil Saint-Denis (FR)
(72) Inventeur: RAGHAVAN, Parthasarathy, 600130 Chennai (IN); DURAISAMY, Shankar, 600130 Chennai (IN); SUBRAMANIAN, Arunkumar, 600130 Chennai (IN); VELASCO, Sebastien, 600130 Chennai (IN); MOHAN, Arulkumaran, 600130 Chennai (IN)
(74) Mandataire: Valeo Powertrain Systems

(56) Documents cités:
- WO-A1-2022/128865
- WO-A2-2012/047528
- CN-A- 110 803 014
- DE-A1- 102009 039 038
- KR-A- 20210 060 882

## Description

La présente invention concerne le domaine des dispositifs de régulation thermique, et plus particulièrement un ensemble de face avant d'un véhicule destiné à être traversé par un flux d'air et équipé d'un dispositif lumineux.

Les véhicules, et notamment les véhicules automobiles, sont couramment équipés d'un ensemble de face avant apte à être traversé par un flux d'air. Ce flux d'air est utilisé, par exemple, pour opérer un échange de chaleur avec un échangeur de chaleur de face avant de sorte à faire fonctionner un système de climatisation et/ou de refroidissement ou un radiateur. De tels ensembles de face peuvent comprendre des systèmes de contrôle de ce flux d'air, communément désignés par l'acronyme anglais AGS pour « *Active Grille Shutter».* Ils permettent notamment d'augmenter le coefficient de pénétration dans l'air quand le moteur ne nécessite pas d'être refroidi par un flux d'air extérieur, ce qui permet de réduire la consommation de carburant et la pollution émise par le véhicule.

Ces systèmes de contrôle de flux d'air sont généralement formés d'une grille au sein de laquelle des passages sont ménagés pour laisser passer le flux d'air. Le système comprend par ailleurs un dispositif d'obturation formé, par exemple, de volets pilotés par une unité de contrôle de sorte à autoriser ou interdire le passage du flux d'air à travers les passages ménagés dans la grille, notamment pour réduire le coefficient de pénétration dans l'air lorsque les volets interdisent le passage du flux d'air.

Il est connu d'équiper les dispositifs d'obturation avec des dispositifs lumineux permettant, notamment lorsque les volets permettent le passage du flux d'air à travers les passages ménagés dans la grille. Cependant, les ensembles de face avant équipés de dispositifs lumineux existants présentent un premier inconvénient. En effet, pour associer à un ensemble de face avant un dispositif lumineux, les ensembles de face avant existants présentent un encombrement important pour loger le dispositif lumineux dans l'ensemble de face avant.

Un deuxième inconvénient des ensembles de face avant comprenant un dispositif lumineux existant est que le dispositif lumineux est solidaire de l'élément d'obturation limitant la flexibilité dans le déplacement du dispositif lumineux au sein de l'ensemble de face avant. Un ensemble lumineux de face avant destiné à équiper un véhicule est connu du document KR 20210060882 A.

La présente invention s'inscrit dans ce contexte en proposant un ensemble lumineux de face avant destiné à équiper un véhicule, l'ensemble lumineux de face avant comprenant une grille qui comporte au moins un passage par lequel un flux d'air est apte à traverser la grille, un dispositif d'obturation configuré pour contrôler une circulation du flux d'air à travers le passage, le dispositif d'obturation comprenant au moins un volet apte à prendre une première position dans laquelle le volet obture le passage et une deuxième position dans laquelle le volet ouvre le passage, l'ensemble lumineux de face avant comprenant un levier qui contrôle au moins les positions du volet, ledit ensemble lumineux de face avant comprenant au moins un dispositif lumineux porté par le levier et distinct du volet.

L'élément d'obturation s'étend dans le passage de la grille de telle sorte que le flux d'air ne peut pas entrer par ledit passage. L'étanchéité de l'ensemble lumineux de face avant est ainsi améliorée.

On comprend que lorsque le volet est dans sa première positon, celui-ci est configuré pour qu'au moins une partie de l'ensemble de l'espace, avantageusement tout l'espace, défini par le passage soit comblé par l'élément d'obturation.

Par ailleurs, le dispositif lumineux de l'ensemble lumineux de face avant est, à l'instar du volet, solidaire par une extrémité du levier, le dispositif lumineux et le volet bien que solidaire d'un même élément, ici le levier, sont deux éléments de l'ensemble lumineux de face avant clairement distinct. On comprend que le dispositif lumineux n'est pas lié au volet et plus spécifiquement lors du déplacement de ce volet. En d'autres termes, le dispositif lumineux n'est pas tenu d'accompagner le volet dans son déplacement pour passer d'une position à l'autre.

Selon une caractéristique de l'invention, le dispositif lumineux est apte à prendre une première configuration dans laquelle le dispositif lumineux est déporté du passage et une deuxième configuration dans laquelle le dispositif lumineux est en regard du passage. On comprend que le dispositif lumineux est apte à émettre un faisceau lumineux traversant la grille lorsque le dispositif est en regard du passage.

Selon une caractéristique de l'invention, le dispositif lumineux est dans sa première configuration lorsque le volet est dans sa première position, le dispositif lumineux étant dans sa deuxième configuration lorsque le volet est dans sa deuxième position. Ainsi, le dispositif lumineux est en regard du passage lorsque le volet n'obture pas le passage. Il en résulte que le faisceau lumineux émis par le dispositif lumineux peut être visible à travers la grille.

Selon une caractéristique de l'invention, le levier est mobile en translation de sorte à faire passer le dispositif lumineux de l'une à l'autre de ses configurations. Cette translation du levier entraine une translation du dispositif lumineux permettant de faire passer le dispositif lumineux de l'une de ses configurations à l'autre.

Selon une caractéristique de l'invention, la grille est pourvue d'au moins un moyen de guidage qui porte le levier pendant sa translation.

Selon une caractéristique de l'invention, l'ensemble de face avant comprend un élément de maintien pourvu d'au moins une gorge à l'intérieur de laquelle circule au moins un dispositif lumineux. Cette gorge permet avantageusement de guider le dispositif lumineux de l'une de ses configurations à l'autre lors de la translation du levier.

Selon une caractéristique de l'invention, le dispositif lumineux et le volet s'étendent le long d'une direction verticale entre une première extrémité et une deuxième extrémité, le levier étant disposé à la première extrémité tandis que l'élément de maintien étant disposé à la deuxième extrémité.

Selon une caractéristique de l'invention, l'ensemble lumineux de face avant comprend une pluralité de dispositifs lumineux disposés en série le long du levier.

Selon une caractéristique de l'invention, le dispositif lumineux est connecté électriquement à un dispositif de contrôle par des moyens de raccordement électrique s'étendant le long du levier.

Selon une caractéristique de l'invention, les dispositifs lumineux sont contrôlés indépendamment les uns des autres par le dispositif de contrôle.

Selon une caractéristique de l'invention, le volet comprend un arbre de rotation porté au moins par la grille, le volet comportant un pion de commande en prise dans le levier et par lequel le volet passe de l'une à l'autre de ses positions.

Selon une caractéristique de l'invention, le dispositif lumineux prend la forme d'un barreau lumineux rigide.

L'invention porte également sur un véhicule automobile comprenant un ensemble lumineux de face avant conforme à l'une quelconque des caractéristiques susmentionnées.

D'autres caractéristiques, détails et avantages de l'invention ressortiront plus clairement à la lecture de la description qui suit d'une part, d'exemples de réalisation donnés à titre indicatifs et non limitatifs en référence aux dessins schématiques annexés d'autre part, sur lesquels :
[Fig.1] représente une vue de face d'un ensemble lumineux de face avant destiné à équiper un véhicule et conforme à l'invention ;
[Fig.2] représente une grille de l'ensemble lumineux de face avant visible sur la figure 1 et isolée des autres éléments de l'ensemble lumineux de face avant ;
[Fig.3] représente un dispositif d'obturation de l'ensemble lumineux de face avant visible sur la figure 1 et isolé des autres éléments de l'ensemble lumineux de face avant ;
[Fig.4] représente une vue arrière de l'ensemble lumineux de face avant visible sur la figure 1 ;
[Fig.5] représente une agrandissement d'un dispositif d'actionnement destiné à piloter au moins un dispositif lumineux de l'ensemble lumineux de face avant.

Il faut tout d'abord noter que si les figures exposent l'invention de manière détaillée pour sa mise en œuvre, ces figures peuvent bien entendu servir à mieux définir l'invention, le cas échéant. Il est également à noter que ces figures n'exposent que des exemples de réalisation de l'invention.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique.

Sur les figures, les éléments communs à plusieurs figures conservent la même référence.

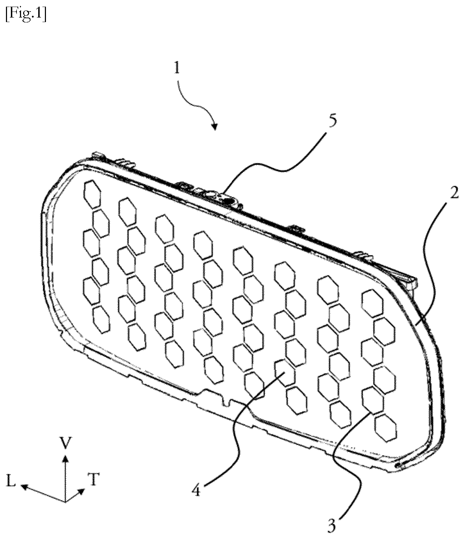

La figure 1 illustre un ensemble lumineux de face avant 1 destiné à équiper un véhicule, et plus spécifiquement un véhicule automobile. L'ensemble lumineux de face avant 1 est par exemple une calandre.

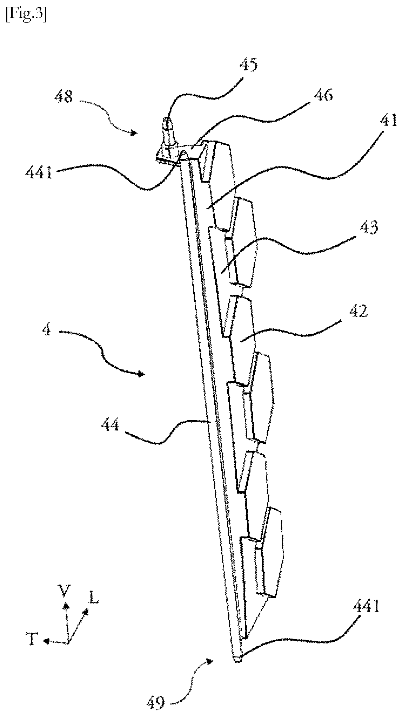

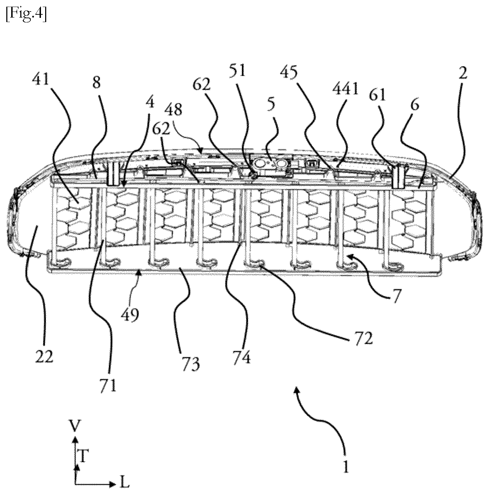

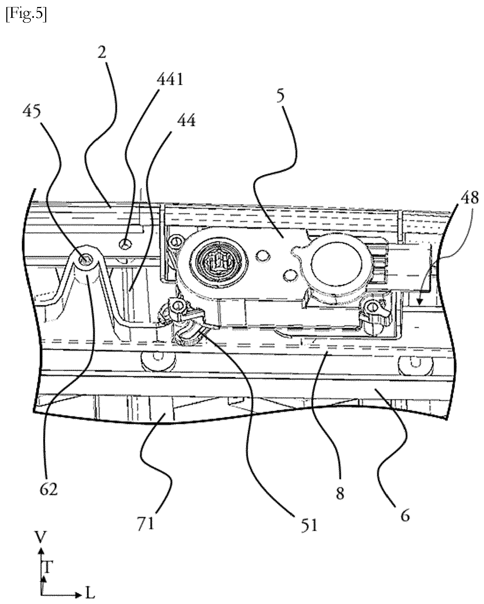

L'ensemble lumineux de face avant 1 comporte une grille 2 dans laquelle est ménagé au moins un passage 3 par lequel un flux d'air est apte à traverser la grille 2 pour entrer dans le compartiment moteur du véhicule. Tel que visible sur la figure 1, ce passage 3 est obstrué par un dispositif d'obturation 4 qui sera décrit plus en détail en lien avec les figures 3 et 4. Le dispositif d'obturation 4 est piloté par une unité de contrôle, non représentée, commandant un dispositif d'actionnement 5 qui sera décrit plus en détail en lien avec la figure 5.

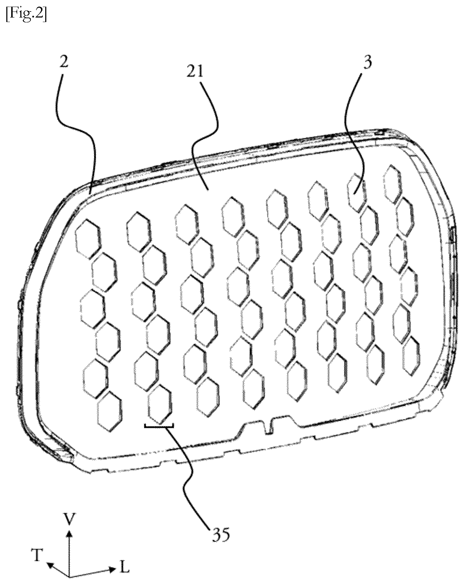

La figure 2 illustre plus précisément la grille 2 de l'ensemble lumineux de face avant 1. Cette grille 2 présente une première face 21 délimitant la grille 2 et par laquelle le flux d'air est apte à entrer dans le compartiment moteur du véhicule lorsque l'ensemble lumineux de face avant 1 équipe ledit véhicule. Opposée à la première face 21, la grille 2 est délimitée par une deuxième face 22, visible sur la figure 4. En outre, la grille 2 comprend, dans le mode de réalisation représenté, une pluralité de passages 3, chaque passage 3 s'étendant entre la première face 21 et la deuxième face 22 de la grille 2.

Tel que visible sur la figure 2, les passages 3 sont réparties en série 35 le long de la grille 2 selon une direction longitudinale parallèle à l'axe L à égale distance les unes des autres. Chacune de ces séries 35 de passages 3 s'étend selon une direction verticale parallèle à l'axe V. En outre, dans le mode de réalisation représenté, chaque série 35 comprend six passages 3. Il convient de noter que dans un mode de réalisation alternatif, les séries 35 peuvent comprendre un nombre différent de passages 3. Par ailleurs, ces séries 35 peuvent comprendre chacune un nombre différent de passages 3 d'une série 35 à une autre.

Les passages 3 présentent avantageusement une forme d'hexagone régulier dont les dimensions des côtés sont similaires d'un passage 3 à l'autre d'une même série 35. Une telle répétition de forme permet de disposer les passages 3 selon un motif régulier, c'est-à-dire selon une alternance régulière, permettant d'homogénéiser la circulation du flux d'air à travers la grille 2.

La figure 3 illustre un volet 41 du dispositif d'obturation 4. Ce volet 41 s'étend, à l'instar des séries de passages 3, principalement selon la direction verticale, parallèlement à l'axe V. Plus précisément, le volet 41 selon ladite direction verticale entre une première extrémité 48 et une deuxième extrémité 49. Il est à noter qu'un seul volet 41 est représenté sur la figure 3, néanmoins, dans le mode de réalisation représenté, le dispositif d'obturation 4 comprend une pluralité de volets 41, et plus particulièrement un nombre de volet 41 égale au nombre de séries 35 de passages 3 sur la grille 2.

On comprend de ce qui précède qu'un volet 41 du dispositif d'obturation 4 est avantageusement configuré pour être complémentaire d'une série 35 de passages 3. À cet effet, le volet 41 comprend au moins un élément d'obturation 42. Dans le mode de réalisation représenté, chaque volet 41 comprend une pluralité d'éléments d'obturation 42. Plus précisément, chaque volet 41 comprend un nombre d'éléments d'obturation 42 égale au nombre de passages 3 de la série 35 à laquelle le volet 41 est associé. En d'autres termes, le volet 41 comprend six éléments d'obturation 42, chaque élément d'obturation 42 étant destiné à obturer l'un des six passages 3 de la série 35 associé. Il convient de noter que l'on entend par associé le fait que le volet 41 est directement destiné à obturer les passages 3 de la série 35 dont le volet 41 est complémentaire.

Les éléments d'obturation 42 se logent dans les passages 3. Ainsi, les éléments d'obturation 42 présentent une forme complémentaire de celle des passages 3. Ces formes similaires entre l'élément d'obturation 42 et le passage 3 permettent à l'élément d'obturation 42 de pénétrer dans le passage 3. Plus spécifiquement, l'élément d'obturation 42 pénètre dans le passage 3 de telle sorte qu'une face de contact 43 du volet 41 vient au contact de la deuxième face 22 de la grille 2. Cette deuxième face 22 comprend une portion de support, distincte des passages 3 ; la face de contact 43 du volet 41 venant au contact de cette portion de support.

Les éléments d'obturation 42 font saillies depuis ladite face de contact 43 du volet 41 sur une dimension égale à la distance séparant la première face 21 et la deuxième face 22 de la grille 2. On comprend que lorsque la face de contact 43 du volet 41 vient au contact de la deuxième face 22 de la grille 2, et plus spécifiquement de la portion de support de la deuxième face 22, les éléments d'obturation 42 sont alors affleurant avec la première face 21 de la grille 2.

Il convient de noter que chaque élément d'obturation 42 présente une extrémité libre ou face libre distante de la partie de l'élément d'obturation 42 qui prend naissance sur la face de contact 43. Cette extrémité libre de l'élément d'obturation 42 s'étend dans un plan d'extension confondu avec le plan d'extension de la première face 21 de la grille 2 au niveau du passage 3 associé audit élément d'obturation 42 quand l'élément d'obturation 42 obture le passage et la face de contact 43 est au contact de la deuxième face 22 de la grille 2.

En outre, ce volet 41 est apte à prendre une première position dans laquelle au moins l'une des séries 35 de passages 3 est obturée par le volet 41, c'est-à-dire que la circulation du flux d'air à travers la grille 2 est interdite par le volet 41, et une deuxième position dans laquelle le volet 41 ouvre le passage 3, c'est-à-dire que la circulation du flux d'air à travers la grille 2 est autorisée par le volet 41. Les volets 41 sont mobiles en rotation entre leur première position et leur deuxième position. Dans la première position des volets 41, les éléments d'obturation 42 s'étendent au moins en partie dans des passages 3 distincts les uns des autres. Les éléments d'obturation 42 étant alors affleurant avec la première face 21 de la grille 2, la face de contact 43 vient au contact de la deuxième face 22 de la grille 2 opposée à la première face 21.

Ce changement de position du volet 41 est permise par un arbre de rotation 44 s'étendant sur un bord longitudinal du volet 41 d'une extrémité verticale à l'autre. Cette arbre de rotation 44 comprend à chaque extrémité des pions de rotation 441 qui se logent dans des paliers de rotation ménagés dans la grille 2, de sorte à permettre la rotation du volet 41 autour d'un axe qui passe par l'arbre de rotation 44.

Le volet 41 comprend également un pion de commande 45 ménagé à au moins l'une des extrémités verticales du volet 41. Plus précisément, ce pion de commande 45 est ménagé sur une languette 46 s'étendant perpendiculairement à la face de contact 43. Le pion de commande 45 est logé dans un palier d'un levier de commande, tel qu'il sera décrit plus en détail en lien avec les figures 4 et 5, le passage du volet 41 de sa première position à sa deuxième position, et vice-et-versa, étant opéré par actionnement du levier.

Les figures 4 et 5 illustrent respectivement une vue arrière de l'ensemble lumineux de face avant 1 et une vue focalisée au niveau du dispositif d'actionnement 5. Ces figures 4 et 5 permettent plus spécifiquement de mettre en évidence un moyen d'émission lumineux 7 comprenant, selon l'invention, au moins un dispositif lumineux 71.

En outre, tel que visible sur la figure 4, les volets 41 sont dans leur première position dans laquelle les volets 41 obturent les séries 35 et les passages 3 associés. Plus particulièrement, la figure 4 permet d'apercevoir la deuxième face 22 de la grille 2. Tel que représenté sur cette figure 4, l'ensemble lumineux de face avant 1 comprend une pluralité de volets 41 répartis le long de la direction longitudinale d'allongement de la grille 2.

Les volets 41 sont liés à un levier 6 mobile en translation selon la direction longitudinale. Dans le mode de réalisation représenté, le levier 6 est bloqué selon la direction verticale et selon la direction transversale, parallèlement à l'axe T, par des moyens de guidage 61. Ces moyens de guidage 61 sont solidaires de la grille 2 et empêchent le déplacement du levier 6 selon les directions transversale et verticale, tout en permettant le déplacement du levier 6 selon la direction longitudinale.

Le levier 6 comprend un palier 62 dans lequel est logé le pion de commande 45. Le levier 6 est relié aux volets 41 par l'intermédiaire du pion de commande 45 de chaque volet et du palier 62 associé. La translation du levier 6 entraîne le déplacement du pion de commande 45 de chaque volet 41. On comprend plus largement que la translation du levier 6 permet de faire passer les volets 41 de l'une de leurs positions à l'autre.

Pour permettre la translation du levier 6, le dispositif d'actionnement 5 comprend une fourche 51 configurée pour générer la translation du levier 6. Tel que particulièrement visible sur la figure 5, la fourche 51 est en prise sur un élément du levier 6 de telle sorte qu'un déplacement de la fourche 51 entraîne la translation du levier 6 ; le pion de commande 45 en prise dans le palier 62 du levier 6 accompagne le mouvement de translation du levier 6 par une rotation du volet autour de l'arbre de rotation 44.

Dans le mode de réalisation représenté, le moyen d'émission lumineux 7 comprend une pluralité de dispositifs lumineux 71 distincts des volets 41, et plus particulièrement un nombre de dispositifs lumineux 71 égal au nombre de volets 41 et donc au nombre de séries 35. On comprend que les dispositifs lumineux 71 sont disposés en série le long du levier 6.

Ces dispositifs lumineux 71 s'étendent, à l'instar des séries 35 et des volets 41, principalement selon une direction verticale, et plus particulièrement entre la première extrémité 48 et la deuxième extrémité 49. Chaque dispositif lumineux 71 est apte à prendre une première configuration dans laquelle le dispositif lumineux 71 est déporté du passage 3, visible sur la figure 4, et une deuxième configuration dans laquelle le dispositif lumineux 71 est en regard du passage 3, c'est-à-dire dans le mode de réalisation représenté en regard de la série 35 de passages 3.

À l'instar des volets 41, le passage d'une configuration à l'autre est commandé par le levier 6 et donc contrôlé par le dispositif d'actionnement 5. Dans le mode de réalisation représenté par les figures 4 et 5, les dispositifs lumineux 71 sont dans leur première configuration lorsque les volets 41 sont dans leur première position et dans leur deuxième configuration lorsque les volets 41 sont dans leur deuxième position.

À cet effet, chaque dispositif lumineux 71 est porté par le levier 6. Plus spécifiquement, chaque dispositif lumineux 71 est porté par une extrémité verticale du dispositif lumineux 71 au niveau de la première extrémité 48. L'extrémité opposée des dispositifs lumineux 71, c'est-à-dire l'extrémité des dispositifs lumineux 71 au niveau de la deuxième extrémité 49, circule à l'intérieur d'une gorge 72 assurant le rôle de guide des dispositifs lumineux 71. Il est à noter que chaque dispositif lumineux 71 circule dans une gorge 72 distincte.

Dans ce mode de réalisation représenté, les volets 41 et les dispositifs lumineux 71 sont solidarisés au levier 6. Il en résulte que la translation du levier 6 entraine concomitamment le déplacement des volets 41 et des dispositifs lumineux 71 de telle sorte que les volets 41 passent de l'une de leur position à l'autre et les dispositifs lumineux 71 passent de l'une de leur configuration à l'autre. Bien entendu, ce passage d'une configuration à l'autre des dispositifs lumineux 71, au moyen de la translation du levier 6, est réalisé de telle sorte que dans les dispositifs lumineux 71 sont dans leur première configuration lorsque les volets 41 sont dans leur première position et dans leur deuxième configuration lorsque les volets 41 sont dans leur deuxième position.

Les gorges 72 sont ménagées dans un élément de maintien 73 s'étendant selon la direction longitudinale perpendiculairement à la direction verticale au niveau d'une extrémité des dispositifs lumineux opposée au levier 6, c'est-à-dire au niveau de la deuxième extrémité 49. Cet élément de maintien 73 comprend une pluralité de paliers 74 permettant de maintenir, conjointement avec la grille 2, les pions de rotation 441 à une position fixe pour assurer le changement de position des volets 41. On comprend de ce qui précède que le levier 6 est disposé au niveau de la première extrémité 48 des volets 41 et des dispositifs lumineux 71, et que l'élément de maintien 73 est disposé au niveau de la deuxième extrémité 49 des volets 41 et des dispositifs lumineux 71.

En outre, les gorges 72 présentent une forme réniforme permettant aux dispositifs lumineux 71 d'être à la même distance de la grille 2 lorsque lesdits dispositifs lumineux 71 sont dans leur première configuration et dans leur deuxième configuration.

Chacune des extrémités verticales des dispositifs lumineux 71, c'est-à-dire au niveau de la première extrémité 48 et de la deuxième extrémité 49, présente un bourrelet 62 permettant de maintenir les dispositifs lumineux 71 solidaires du levier 6 et de l'élément de maintien 73. Plus précisément, chaque dispositif lumineux 71 est, dans le mode de réalisation représenté, logé dans un orifice ménagé dans le levier 6, le bourrelet 62 permettant de bloquer au moins en partie le déplacement du dispositif lumineux 71 dans l'orifice. Au niveau de la deuxième extrémité 49, chaque dispositif lumineux 71 est logé dans une gorge 72, le dispositif lumineux 71 comprend un autre bourrelet 62, non visible sur la figure 4, à cette extrémité empêchant au moins en partie le déplacement du dispositif lumineux 71 dans la gorge 72 selon la direction verticale. On comprend que la coopération des deux bourrelets 62 d'un dispositif lumineux 71 lui permet d'être maintenu solidaire du levier 6 et de l'élément de maintien 73.

En outre, dans le mode de réalisation représenté, chaque dispositif lumineux 71 prend la forme d'un barreau lumineux rigide. Ces dispositifs lumineux 71 sont connectés électriquement à un dispositif de contrôle, ici non représenté, par des moyens de raccordement électrique 8 s'étendant le long du levier 6 et permettant d'une part, d'alimenter électriquement les dispositifs lumineux 71 et d'autre part, de transmettre des informations liées au fonctionnement du dispositif lumineux 71. Ces informations permettent notamment de contrôler sélectivement chaque dispositif lumineux 71 et, par exemple, de moduler la couleur de du faisceau lumineux émis par chaque dispositif lumineux 71.

La présente invention atteint bien le but qu'elle s'était fixé en proposant un ensemble lumineux de face dont la compacité est améliorée et dans lequel les dispositifs lumineux, distincts des volets, sont aptes à se déplacer indépendamment du déplacement du volet.

## Revendications

1. Ensemble lumineux de face avant (1) destiné à équiper un véhicule, l'ensemble lumineux de face avant (1) comprenant une grille (2) qui comporte au moins un passage (3) par lequel un flux d'air est apte à traverser la grille (2), un dispositif d'obturation (4) configuré pour contrôler une circulation du flux d'air à travers le passage (3), le dispositif d'obturation (4) comprenant au moins un volet (41) apte à prendre une première position dans laquelle le volet (41) obture le passage (3) et une deuxième position dans laquelle le volet (41) ouvre le passage (3), l'ensemble lumineux de face avant (1) comprenant un levier (6) qui contrôle au moins les positions du volet (41), **caractérisé en ce que** ledit ensemble lumineux de face avant (1) comprend au moins un dispositif lumineux (71) porté par le levier (6) et distinct du volet (41).

2. Ensemble lumineux de face avant (1) selon la revendication précédente, dans lequel le dispositif lumineux (71) est apte à prendre une première configuration dans laquelle le dispositif lumineux (71) est déporté du passage (3) et une deuxième configuration dans laquelle le dispositif lumineux (71) est en regard du passage (3).

3. Ensemble lumineux de face avant (1) selon la revendication précédente, dans lequel le dispositif lumineux (71) est dans sa première configuration lorsque le volet (41) est dans sa première position, le dispositif lumineux (71) étant dans sa deuxième configuration lorsque le volet (41) est dans sa deuxième position.

4. Ensemble lumineux de face avant (1) selon l'une quelconque des revendications 2 et 3, dans lequel le levier (41) est mobile en translation de sorte à faire passer le dispositif lumineux (71) de l'une à l'autre de ses configurations.

5. Ensemble lumineux de face avant (1) selon la revendication précédente, dans lequel la grille (2) est pourvue d'au moins un moyen de guidage (61) qui porte le levier (6) pendant sa translation.

6. Ensemble lumineux de face avant (1) selon l'une quelconque des revendications précédentes, comprenant un élément de maintien (73) pourvu d'au moins une gorge (72) à l'intérieur de laquelle circule au moins un dispositif lumineux (71).

7. Ensemble lumineux de face avant (1) selon la revendication précédente, dans lequel le dispositif lumineux (71) et le volet (41) s'étendent le long d'une direction verticale entre une première extrémité (48) et une deuxième extrémité (49), le levier (6) étant disposé à la première extrémité (48) tandis que l'élément de maintien (73) étant disposé à la deuxième extrémité (49).

8. Ensemble lumineux de face avant (1) selon l'une quelconque des revendications précédentes, comprenant une pluralité de dispositifs lumineux (71) disposés en série le long du levier (6).

9. Ensemble lumineux de face avant (1) selon l'une quelconque des revendications précédentes, dans lequel le dispositif lumineux (71) est connecté électriquement à un dispositif de contrôle par des moyens de raccordement (8) électrique s'étendant le long du levier (6).

10. Ensemble lumineux de face avant (1) selon la revendication précédente en combinaison de la revendication 8, dans lequel les dispositifs lumineux (71) sont contrôlés indépendamment les uns des autres par le dispositif de contrôle.

11. Ensemble lumineux de face avant (1) selon l'une quelconque des revendications précédentes, dans lequel le volet (41) comprend un arbre de rotation (44) porté au moins par la grille (2), le volet (41) comportant un pion de commande (45) en prise dans le levier (6) et par lequel le volet (41) passe de l'une à l'autre de ses positions.

12. Ensemble lumineux de face avant (1) selon l'une quelconque des revendications précédentes, dans lequel le dispositif lumineux (71) prend la forme d'un barreau lumineux rigide.

13. Véhicule automobile comprenant un ensemble lumineux de face avant (1) selon l'une quelconque des revendications précédentes.

## Patentansprüche

1. Frontseitige Beleuchtungsanordnung (1) zur Anbringung in einem Fahrzeug, wobei die frontseitige Beleuchtungsanordnung (1) einen Schirm (2) umfasst, der mindestens einen Durchgang (3) aufweist, durch den ein Luftstrom den Schirm (2) passieren kann, eine Absperrvorrichtung (4), die konfiguriert ist, um die Zirkulation des Luftstroms durch den Durchgang (3) zu steuern, wobei die Absperrvorrichtung (4) mindestens eine Klappe (41) umfasst, die angepasst ist, um eine erste Position einzunehmen, in der die Klappe (41) den Durchgang (3) absperrt, und eine zweite Position, in der die Klappe (41) den Durchgang (3) öffnet, wobei die frontseitige Beleuchtungsanordnung (1) einen Hebel (6) umfasst, der mindestens die Positionen der Klappe (41) steuert, **dadurch gekennzeichnet, dass** die frontseitige Beleuchtungsanordnung (1) mindestens eine Beleuchtungsvorrichtung (71) umfasst, die vom Hebel (6) getragen wird und von der Klappe (41) getrennt ist.

2. Frontseitige Beleuchtungsanordnung (1) nach dem vorhergehenden Anspruch, wobei die Beleuchtungsvorrichtung (71) angepasst ist, um eine erste Konfiguration einzunehmen, in der die Beleuchtungsvorrichtung (71) vom Durchgang (3) wegbewegt ist, und eine zweite Konfiguration, in der die Beleuchtungsvorrichtung (71) dem Durchgang (3) zugewandt ist.

3. Frontseitige Beleuchtungsanordnung (1) nach dem vorhergehenden Anspruch, wobei sich die Beleuchtungsvorrichtung (71) in ihrer ersten Konfiguration befindet, wenn sich die Klappe (41) in ihrer ersten Position befindet, wobei sich die Beleuchtungsvorrichtung (71) in ihrer zweiten Konfiguration befindet, wenn sich die Klappe (41) in ihrer zweiten Position befindet.

4. Frontseitige Beleuchtungsanordnung (1) nach Anspruch 2 oder 3, wobei der Hebel (6) translatorisch bewegbar ist, um die Beleuchtungsvorrichtung (71) von einer ihrer Konfigurationen in die andere zu bewegen.

5. Frontseitige Beleuchtungsanordnung (1) nach dem vorhergehenden Anspruch, wobei der Schirm (2) mit mindestens einem Führungsmittel (61) versehen ist, das den Hebel (6) bei seiner translatorischen Bewegung führt.

6. Frontseitige Beleuchtungsanordnung (1) nach einem der vorhergehenden Ansprüche, umfassend ein Halteelement (73) mit mindestens einer Nut (72), in der mindestens eine Beleuchtungsvorrichtung (71) verläuft.

7. Frontseitige Beleuchtungsanordnung (1) nach dem vorhergehenden Anspruch, wobei sich die Beleuchtungsvorrichtung (71) und die Klappe (41) in vertikaler Richtung zwischen einem ersten Ende (48) und einem zweiten Ende (49) erstrecken, wobei der Hebel (6) am ersten Ende (48) angeordnet ist, während das Halteelement (73) am zweiten Ende (49) angeordnet ist.

8. Frontseitige Beleuchtungsanordnung (1) nach einem der vorhergehenden Ansprüche, umfassend eine Vielzahl von Beleuchtungsvorrichtungen (71), die in Reihe entlang des Hebels (6) angeordnet sind.

9. Frontseitige Beleuchtungsanordnung (1) nach einem der vorhergehenden Ansprüche, wobei die Beleuchtungsvorrichtung (71) über elektrische Verbindungsmittel (8), die sich entlang des Hebels (6) erstrecken, elektrisch mit einer Steuervorrichtung verbunden ist.

10. Frontseitige Beleuchtungsanordnung (1) nach dem vorhergehenden Anspruch in Verbindung mit Anspruch 8, wobei die Beleuchtungsvorrichtungen (71) unabhängig voneinander durch die Steuervorrichtung gesteuert werden.

11. Frontseitige Beleuchtungsanordnung (1) nach einem der vorhergehenden Ansprüche, wobei die Klappe (41) eine Drehachse (44) umfasst, die mindestens vom Schirm (2) getragen wird, wobei die Klappe (41) einen Steuerstift (45) aufweist, der in den Hebel (6) eingreift und über den die Klappe (41) von einer ihrer Positionen in die andere übergeht.

12. Frontseitige Beleuchtungsanordnung (1) nach einem der vorhergehenden Ansprüche, wobei die Beleuchtungsvorrichtung (71) in Form einer starren Lichtleiste ausgebildet ist.

13. Kraftfahrzeug, umfassend eine frontseitige Beleuchtungsanordnung (1) nach einem der vorhergehenden Ansprüche.

## Claims

1. Front face lighting assembly (1) intended to be fitted in a vehicle, the front face lighting assembly (1) comprising a screen (2) which has at least one passage (3) via which an air flow can pass through the screen (2), a shut-off device (4) configured to control circulation of the air flow through the passage (3), the shut-off device (4) comprising at least one flap (41) adapted to take up a first position in which the flap (41) shuts off the passage (3) and a second position in which the flap (41) opens the passage (3), the front face lighting assembly (1) comprising a lever (6) which controls at least the positions of the flap (41), **characterized in that** said front face lighting assembly (1) comprises at least one lighting device (71) borne by the lever (6) and distinct from the flap (41).

2. Front face lighting assembly (1) according to the preceding claim, wherein the lighting device (71) is adapted to take up a first configuration in which the lighting device (71) is moved away from the passage (3) and a second configuration in which the lighting device (71) is facing the passage (3).

3. Front face lighting assembly (1) according to the preceding claim, wherein the lighting device (71) is in its first configuration when the flap (41) is in its first position, the lighting device (71) being in its second configuration when the flap (41) is in its second position.

4. Front face lighting assembly (1) according to either of Claims 2 and 3, wherein the lever (41) is movable in translation in such a way as to cause the lighting device (71) to go from one of its configurations to the other.

5. Front face lighting assembly (1) according to the preceding claim, wherein the screen (2) is provided with at least one guide means (61) which carries the lever (6) in its translational movement.

6. Front face lighting assembly (1) according to any one of the preceding claims, comprising a retention element (73) having at least one groove (72) inside which at least one lighting device (71) travels.

7. Front face lighting assembly (1) according to the preceding claim, wherein the lighting device (71) and the flap (41) extend in a vertical direction between a first end (48) and a second end (49), the lever (6) being arranged at the first end (48) while the retention element (73) is arranged at the second end (49).

8. Front face lighting assembly (1) according to any one of the preceding claims, comprising a plurality of lighting devices (71) arranged in series along the lever (6).

9. Front face lighting assembly (1) according to any one of the preceding claims, wherein the lighting device (71) is electrically connected to a control device by electrical connection means (8) extending along the lever (6).

10. Front face lighting assembly (1) according to the preceding claim in conjunction with Claim 8, wherein the lighting devices (71) are controlled independently of one another by the control device.

11. Front face lighting assembly (1) according to any one of the preceding claims, wherein the flap (41) comprises a rotation shaft (44) borne at least by the screen (2), the flap (41) having a control pin (45) engaged in the lever (6) and via which the flap (41) goes from one of its positions to the other.

12. Front face lighting assembly (1) according to any one of the preceding claims, wherein the lighting device (71) is in the form of a rigid strip light.

13. Motor vehicle comprising a front face lighting assembly (1) according to any one of the preceding claims.
